# EUROPEAN PATENT SPECIFICATION

(11) **EP 3 042 835 B1**
(45) Date of publication and mention of the grant of the patent: **29.01.2020**
(21) Application number: 16150199.4
(22) Date of filing: 05.01.2016
(51) Int. Cl.: B62K 25/28, B62K 11/02, B62K 19/12

(54) **MOTORCYCLE**
MOTORRAD
MOTOCYCLETTE

(30) Priority: 06.01.2015 TW 104100296
(43) Date of publication of application: 13.07.2016
(73) Proprietor: Kwang Yang Motor Co., Ltd., Kaohsiung City 80794 (TW)
(72) Inventor: TSAI, Feng-Chih, Kaohsiung City 83044 (TW)
(74) Representative: Cohausz & Florack

(56) References cited:
- EP-A1- 1 964 759
- EP-A2- 0 295 799
- EP-A2- 1 864 901
- US-A1- 2006 283 650

## Description

The disclosure relates to a motorcycle, more particularly to a motorcycle including a frame with fewer frame members.

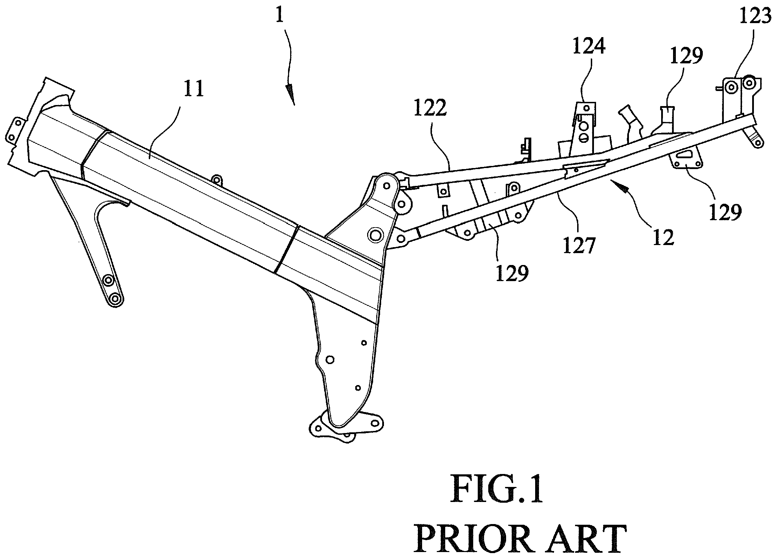

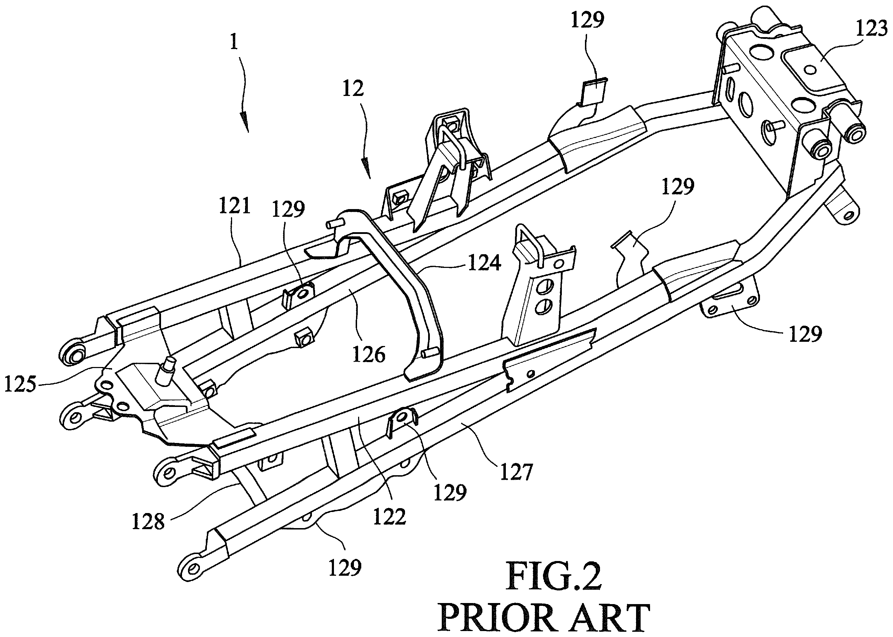

As shown in Figure 1, a frame 1 of a conventional motorcycle includes a front frame structure 11 and a rear frame structure 12 connected to a rear end of the front frame structure 11. As further shown in Figure 2, the rear frame structure 12 includes an upper right frame 121, an upper left frame 122, a tail frame 123, an upper cross frame 124, a head member 125, a lower right frame 126, a lower left frame 127, a lower cross frame 128, and a plurality of connecting members 129. The upper left frame 122 is spaced apart from the upper right frame 121 in a lateral direction. The tail member 123 has two ends respectively connected to a rear end of the upper right frame 121 and a rear end of the upper left frame 122. The upper cross frame 124 has two ends respectively connected to a middle portion of the upper right frame 121 and a middle portion of the upper left frame 122. The head member 125 has two ends respectively connected to a front end of the upper right frame 121 and a front end of the upper left frame 122. The lower right frame 126 is connected to and disposed under the upper right frame 121. The lower left frame 127 is connected to and disposed under the upper left frame 122. The lower cross frame 128 has two ends respectively connected to a front end portion of the lower right frame 126 and a front end portion of the lower left frame 127. The connecting members 129 are disposed on the upper right frame 121, the lower right frame 126, the upper left frame 122, and the lower left frame 127.

The above-mentioned elements of the rear frame structure 12 are welded together, causing the frame 1 to have a relatively complicated manufacturing process, relatively low structural stability, relatively large weight, and relatively difficult assembly process. Furthermore, a rear shock absorber (not shown) is generally disposed between middle portions of the lower right frame 126 and the lower left frame 127, with one end thereof being connected to the rear frame structure 12, thereby leaving a limited amount of space between the lower right frame 126 and the lower left frame 127 for installation of a storage box.

Another motorcycle with a front frame structure and a rear frame structure is known from US-A-20060283650.

Therefore, the object of the disclosure is to provide a motorcycle including a frame having a simple structure, and capable of being mounted with a rear shock absorber which does not occupy a large portion of an internal space of the frame.

The motorcycle according to the invention is defined in claim 1. Advantageous embodiments are set out in the dependent claims.

Other features and advantages of the disclosure will become apparent in the following detailed description of the embodiment with reference to the accompanying drawings, of which:
- Figure 1: is a side view of a body frame of a conventional motorcycle;
- Figure 2: is a perspective view of the body frame of the conventional motorcycle;
- Figure 3: is a left side view of an embodiment of a motorcycle according to the invention;
- Figure 4: is a right side view of the embodiment;
- Figure 5: is a perspective view of a rear frame structure of the embodiment;
- Figure 6: is a left side view of the rear frame structure; and
- Figure 7: is a top view of the rear frame structure.

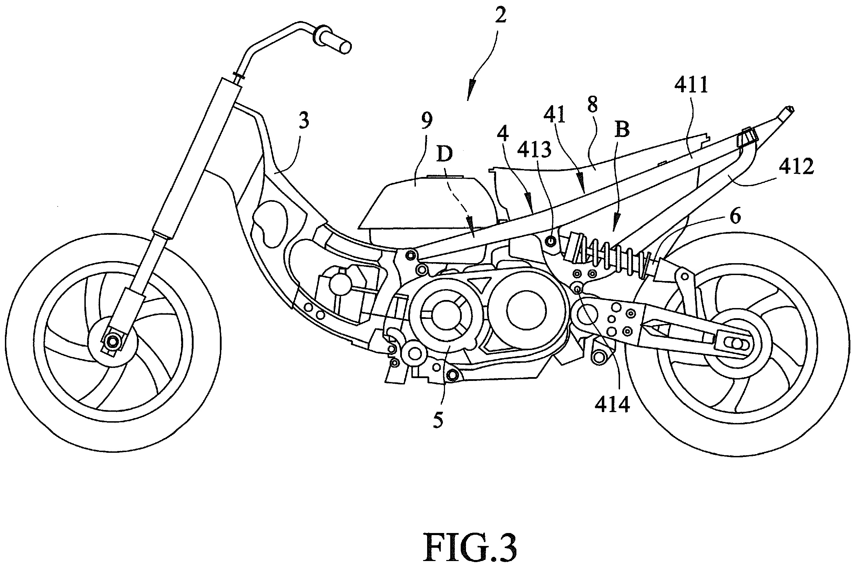

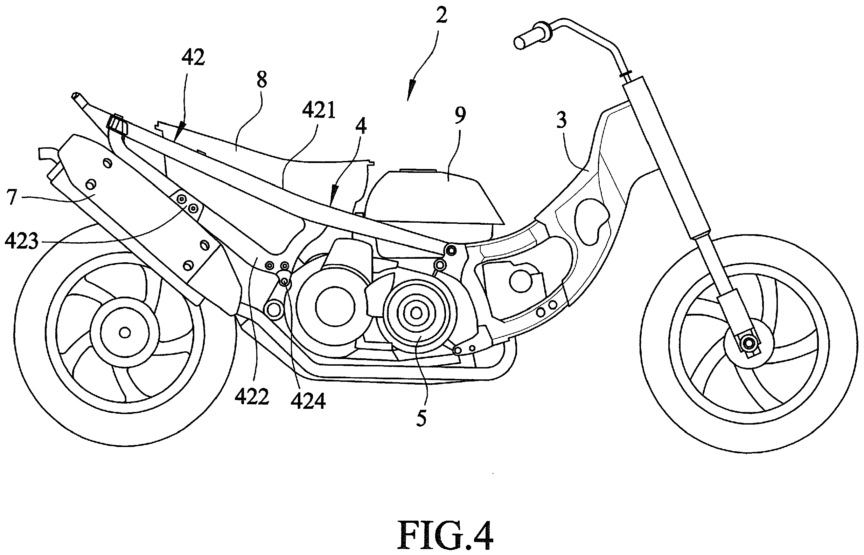

As shown in Figures 3 and 4, the embodiment of a motorcycle 2 according to the present disclosure includes a front frame structure 3, a rear frame structure 4 connected to a rear end of the front frame structure 3, an engine 5 mounted between the front frame structure 3 and the rear frame structure 4, a rear shock absorber 6 connected to the rear frame structure 4, an exhaust pipe 7 connected to the rear frame structure 4 and opposite to the rear shock absorber 6 in a lateral direction, a storage box 8 disposed inside a space in the rear frame structure 4, and a fuel tank 9 disposed inside the space in the rear frame structure 4 and in front of the storage box 8.

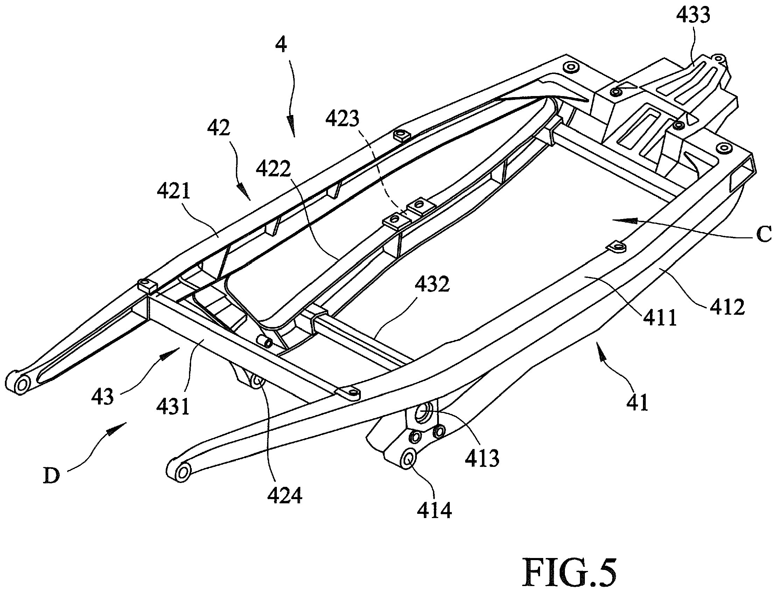

Referring to Figures 3 and 5, the rear frame structure 4 includes a first frame unit 41, a second frame unit 42, and a connecting unit 43. The first frame unit 41 is formed as one piece, is connected to the front frame structure 3, and extends rearwardly. The second frame unit 42 is formed as one piece, is connected to the front frame structure 3, is spaced apart from the first frame unit 41 in the lateral direction, and extends rearwardly. The connecting unit 43 is connected between the first frame unit 41 and the second frame unit 42.

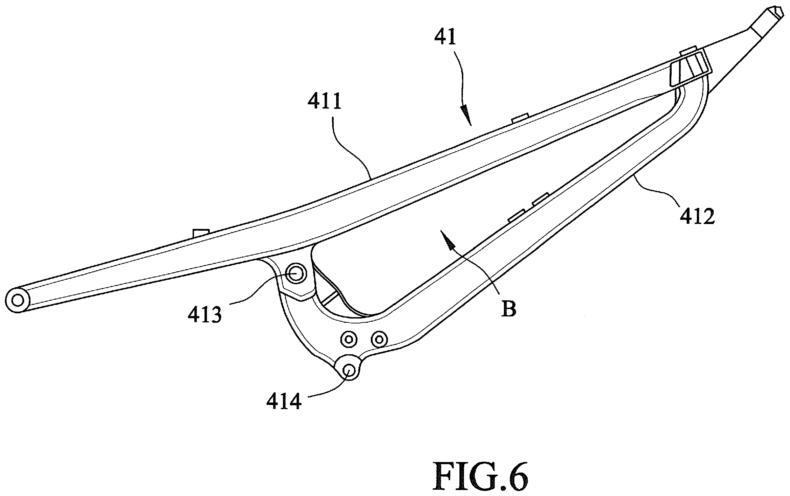

As shown in Figures 3, 5, and 6, the first frame unit 41 has a first upper frame 411, a first lower frame 412, an absorber-connecting member 413, and a first engine-connecting member 414. The first upper frame 411 is connected to the front frame structure 3 and extends rearwardly. The first lower frame 412 is connected to and disposed below the first upper frame 411. The absorber-connecting member 413 is formed on the first upper frame 411 and is connected to one end of the rear shock absorber 6. The first engine-connecting member 414 is formed on the first lower frame 412 and is connected to the engine 5. Each of the first upper frame 411, the first lower frame 412, the absorber-connecting member 413, and the first engine-connecting member 414 is made of a non-iron material, such as light alloy, via a casting process. The first lower frame 412 has a portion that is inwardly depressed and that cooperates with the first upper frame 411 to define a receiving space (B) that extends rearwardly. The rear shock absorber 6 is mounted inside the receiving space (B), is located below the first upper frame 411, and is configured not to extend outside of the first upper frame 411 when the motorcycle 2 is seen from a position above the rear frame structure 4. Thus, the rear shock absorber 6 occupies less space inside the rear frame structure 4, such that there is more space available for receiving the storage box 8.

As shown in Figures 4 and 5, the second frame unit 42 has a second upper frame 421, a second lower frame 422, a pipe-connecting member 423, and a second engine-connecting member 424. The second upper frame 421 is connected to the front frame structure 3 and extends rearwardly. The second lower frame 422 is connected to and disposed under the second upper frame 421. The pipe-connecting member 423 is formed on the second lower frame 422 and is connected to the exhaust pipe 7. The second engine-connecting member 424 is formed on the second lower frame 422 and is connected to the engine 5. The first engine-connecting member 414 and the second engine-connecting member 424 are respectively connected to opposite lateral ends of the engine 5 in the lateral direction so that the engine 5 is mounted between the first frame unit 41 and the second frame unit 42. Each of the second upper frame 421, the second lower frame 422, the pipe-connecting member 423, and the second engine-connecting member 424 is made of a non-iron material, such as light alloy, via a casting process.

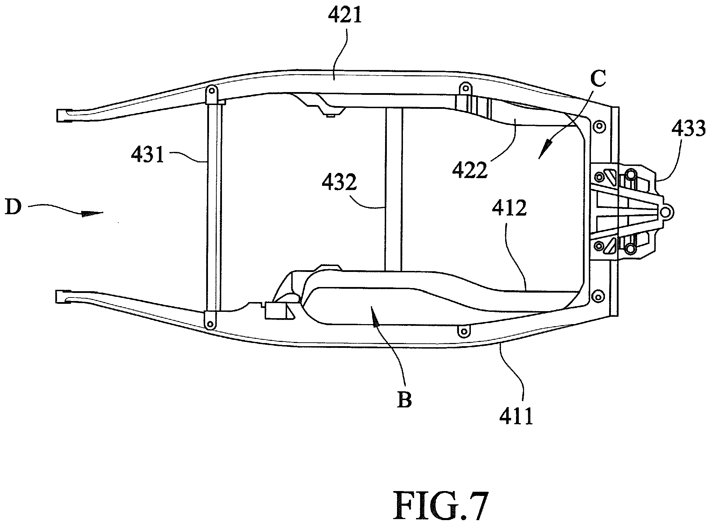

Referring to Figures 5 and 7, the connecting unit 43 has an upper cross frame 431, a lower cross frame 432, and a tail member 433. The upper cross frame 431 has two ends respectively connected to the first upper frame 411 of the first frame unit 41 and the second upper frame 421 of the second frame unit 42. The lower cross frame 432 has two ends respectively connected to the first lower frame 412 of the first frame unit 41 and the second lower frame 422 of the second frame unit 42. The tail member 433 has an end connected to rear ends of the first upper and lower frames 411, 412 of the first frame unit 41, and an opposite end connected to rear ends of the second upper and lower frames 421, 422 of the second frame unit 42. Each of the upper cross frame 431, the lower cross frame 432, and the tail member 433 is welded to the first frame unit 41 and the second frame unit 42.

A storage space (C) is defined cooperatively by the first upper frame 411, the second upper frame 421, the upper cross frame 431, and the tail member 433. An opening space (D) is defined cooperatively by a front end portion of the first upper frame 411, a front end portion of the second upper frame 421, and the upper cross frame 431. A rear end of the fuel tank 9 (see Figure 3) is received in the opening space (D). In such manner, a total length of the motorcycle 2 along a front-rear direction can be decreased (i.e., the motorcycle 2 can be more compact). It should be noted that, in this embodiment, the first frame unit 41 and the rear shock absorber 6 are located at the left side of the motorcycle 2, and the second frame unit 42 and the exhaust pipe 7 are located at the right side of the motorcycle 2. In other embodiments, the first frame unit 41 and the rear shock absorber 6 may be located at the right side of the motorcycle 2, and the second frame unit 42 and the exhaust pipe 7 can be located at the left side of the motorcycle 2.

In conclusion, since each of the first frame unit 41 and the second frame unit 42 is formed as one piece, a manufacturing process of the motorcycle 2 can be simplified, and a structural stability and a weight of the rear frame structure 4 can be reduced. Since the rear shock absorber 6 is received in the receiving space (B), the width of the motorcycle 2 body can be reduced, and flexibility of disposition in the space inside the motorcycle 2 can be increased.

## Claims

1. A motorcycle (2) including:
a front frame structure (3);
a rear frame structure (4) connected to a rear end of said front frame structure (3), and including
a first frame unit (41) that is connected to said front frame structure (3) and that extends rearwardly,
a second frame unit (42) that is connected to said front frame structure (3), that is spaced apart from said first frame unit (41) in a lateral direction, and that extends rearwardly;
an engine (5) mounted between said first frame unit (41) and said second frame unit (42); and
a rear shock absorber (6) connected to said first frame unit (41) of said rear frame structure (4); whereby:
said first frame unit (41) is formed as one piece and defines a receiving space (B) that extends inwardly, said second frame unit (42) is formed as one piece, and said rear shock absorber (6) is mounted inside said receiving space (B);
said first frame unit (41) has a first upper frame (411) connected to said front frame structure (3) and extending rearwardly, and a first lower frame (412) connected to and disposed below said first upper frame (411), and having a portion that is inwardly depressed and that cooperates with said first upper frame (411) to define said receiving space (B);
said second frame unit (42) has a second upper frame (421) connected to said front frame structure (3) and extending rearwardly, and a second lower frame (422) connected to and disposed under said second upper frame (421);
each of said first upper frame (411), said first lower frame (412), said second upper frame (421), and said second lower frame (422) is made of a non-iron material via a casting process;
said first frame unit (41) further has an absorber-connecting member (413) formed on said first upper frame (411) and connected to said rear shock absorber (6);
said rear frame structure (4) further includes a connecting unit (43) connected between said first frame unit (41) and said second frame unit (42); and
said connecting unit (43) has
an upper cross frame (431) having two ends that are respectively connected to said first upper frame (411) of said first frame unit (41) and said second upper frame (421) of said second frame unit (42),
a lower cross frame (432) having two ends that are respectively connected to said first lower frame (412) of said first frame unit (41) and said second lower frame (422) of said second frame unit (42), and
a tail member (433) having two ends respectively connected to a rear end of said first frame unit (41) and a rear end of said second frame unit (42).

2. The motorcycle (2) as claimed in Claim 1, further **characterized in that** said engine (5) is mounted between said front frame structure (3) and said rear frame structure (4).

3. The motorcycle (2) as claimed in any one of Claims 1 to 2, further **characterized in that** said first frame unit (41) further has a first engine-connecting member (414) formed on said first lower frame (412) and connected to said engine (5), said second frame unit (42) further having a second engine-connecting member (424) that is formed on said second lower frame (422) and that is connected to said engine (5), said first engine-connecting member (414) and said second engine-connecting member (424) being respectively connected to opposite lateral ends of said engine (5) in the lateral direction.

4. The motorcycle (2) as claimed in any one of Claims 1 to 3, further **characterized in that** said motorcycle (2) further includes an exhaust pipe (7), said second frame unit (42) further having a pipe-connecting member (423) that is formed on said second lower frame (422) and that is connected to said exhaust pipe (7).

## Patentansprüche

1. Motorrad (2), enthaltend:
eine Frontrahmenkonstruktion (3);
eine Heckrahmenkonstruktion (4), die mit einem hinteren Ende der Frontrahmenkonstruktion (3) verbunden ist,
sowie enthaltend:
eine erste Rahmeneinheit (41), die mit der Frontrahmenkonstruktion (3) verbunden ist, und die sich nach hinten erstreckt,
eine zweite Rahmeneinheit (42), die mit der Frontrahmenkonstruktion (3) verbunden ist, die von der ersten Rahmeneinheit (41) in einer Querrichtung mit Abstand angeordnet ist, und die sich nach hinten erstreckt;
einen Motor (5), der zwischen der ersten Rahmeneinheit (41) und der zweiten Rahmeneinheit (42) montiert ist; und
einen hinteren Stoßdämpfer (6), der mit der ersten Rahmeneinheit (41) der Heckrahmenkonstruktion (4) verbunden ist;
wobei:
die erste Rahmeneinheit (41) in einem Stück ausgebildet ist und einen Aufnahmeraum (B) definiert, der sich nach innen erstreckt, wobei die zweite Rahmeneinheit (42) in einem Stück ausgebildet ist und der hintere Stoßdämpfer (6) innerhalb des Aufnahmeraums (B) montiert ist;
die erste Rahmeneinheit (41) einen ersten Oberrahmen (411) aufweist, der mit der Frontrahmenkonstruktion (3) verbunden ist und sich nach hinten erstreckt,
sowie einen ersten Unterrahmen (412) aufweist, der mit dem ersten Oberrahmen (411) verbunden und unter selbigem angeordnet ist, sowie einen Teil aufweist, der nach innen vertieft ist und das mit dem ersten Oberrahmen (411) zusammenwirkt, um den Aufnahmeraum (B) zu definieren;
die zweite Rahmeneinheit (42) einen zweiten Oberrahmen (421) aufweist, der mit der Frontrahmenkonstruktion (3) verbunden ist und sich nach hinten erstreckt, sowie einen zweiten Unterrahmen (422) aufweist, der mit dem zweiten Oberahmen (421) verbunden und unter selbigem angeordnet ist;
der erste Oberrahmen (411), der erste Unterrahmen (412), der zweite Oberrahmen (421) und der zweite Unterrahmen (422) jeweils durch ein Gießverfahren aus einem Nichteisenmaterial hergestellt ist;
die erste Rahmeneinheit (41) ferner ein Stoßdämpferverbindungsteil (413) aufweist, das an dem ersten Oberrahmen (411) ausgebildet ist und mit dem hinteren Stoßdämpfer (6) verbunden ist;
die Heckrahmenkonstruktion (4) ferner eine Verbindungseinheit (43) enthält, die zwischen der ersten Rahmeneinheit (41) und der zweiten Rahmeneinheit (42) verbunden ist; und
die Verbindungseinheit (43) Folgendes aufweist:
einen oberen Kreuzrahmen (431), der zwei Enden aufweist, die entsprechend mit dem ersten Oberrahmen (411) der ersten Rahmeneinheit (41) und dem zweiten Oberrahmen (421) der zweiten Rahmeneinheit (42) verbunden sind,
einen unteren Kreuzrahmen (432), der zwei Enden aufweist, die entsprechend mit dem ersten Unterrahmen (412) der ersten Rahmeneinheit (41) und dem zweiten Unterrahmen (422) der zweiten Rahmeneinheit (42) verbunden sind, und
ein Heckteil (433), das zwei Enden aufweist, die entsprechend mit einem hinteren Ende der ersten Rahmeneinheit (41) und einem hinteren Ende der zweiten Rahmeneinheit (42) verbunden sind.

2. Motorrad (2) nach Anspruch 1, ferner **dadurch gekennzeichnet, dass** der Motor (5) zwischen der Frontrahmenkonstruktion (3) und der Heckrahmenkonstruktion (4) montiert ist.

3. Motorrad (2) nach einem der Ansprüche 1 bis 2, ferner **dadurch gekennzeichnet, dass** die erste Rahmeneinheit (41) ferner ein erstes Motorverbindungsteil (414) aufweist, das an dem ersten Unterrahmen (412) ausgebildet ist und mit dem Motor (5) verbunden ist, wobei die zweite Rahmeneinheit (42) ferner ein zweites Motorverbindungsteil (424) aufweist, das an dem zweiten Unterrahmen (422) ausgebildet ist und das mit dem Motor (5) verbunden ist, wobei das erste Motorverbindungsteil (414) und das zweite Motorverbindungsteil (424) entsprechend mit gegenüberliegenden seitlichen Enden des Motors (5) in Querrichtung verbunden sind.

4. Motorrad (2) nach einem der Ansprüche 1 bis 3, ferner **dadurch gekennzeichnet, dass** das Motorrad (2) ferner ein Auspuffrohr (7) enthält, wobei die zweite Rahmeneinheit (42) ferner ein Rohrverbindungsteil (423) aufweist, das an dem zweiten Unterrahmen (422) ausgebildet ist und das mit dem Auspuffrohr (7) verbunden ist.

## Revendications

1. Motocyclette (2) comprenant :
une structure de cadre frontal (3) ;
une structure de cadre arrière (4) connectée à une extrémité arrière de ladite structure de cadre frontal (3), et comprenant
une première unité de cadre (41) qui est connectée à ladite structure de cadre frontal (3) et qui s'étend vers l'arrière,
une seconde unité de cadre (42) qui est connectée à ladite structure de cadre frontal (3), qui est espacée de ladite première unité de cadre (41) dans une direction latérale, et qui s'étend vers l'arrière ;
un moteur (5) monté entre ladite première unité de cadre (41) et ladite seconde unité de cadre (42) ; et
un absorbeur de choc arrière (6) connecté à ladite première unité de cadre (41) de ladite structure de cadre arrière (4) ;
moyennant quoi :
ladite première unité de cadre (41) est formée en une pièce et définit un espace de réception (B) qui s'étend vers l'intérieur, ladite seconde unité de cadre (42) est formée en une pièce, et ledit absorbeur de choc arrière (6) est monté à l'intérieur dudit espace de réception (B) ;
ladite première unité de cadre (41) a un premier cadre supérieur (411) connecté à ladite structure de cadre frontal (3) et s'étendant vers l'arrière, et un premier cadre inférieur (412) connecté à et disposé au-dessous du premier cadre supérieur (411), et ayant une partie qui est déprimée vers l'intérieur et qui coopère avec ledit premier cadre supérieur (411) pour définir ledit espace de réception (B) ;
ladite seconde unité de cadre (42) a un second cadre supérieur (421) connecté à ladite structure de cadre frontal (3) et s'étendant vers l'arrière, et un second cadre inférieur (422) connecté à et disposé au-dessous dudit second cadre supérieur (421) ;
chacun dudit premier cadre supérieur (411), dudit premier cadre inférieur (412), dudit second cadre supérieur (421) et dudit second cadre inférieur (422) est constitué d'un matériau non ferreux via un processus de moulage ;
ladite première unité de cadre (41) a en outre un élément connectant l'absorbeur (413) formé sur ledit premier cadre supérieur (411) et connecté audit absorbeur de choc arrière (6) ;
ladite structure de cadre arrière (4) comprend en outre une unité de connexion (43) connectée entre ladite première unité de cadre (41) et ladite seconde unité de cadre (42) ; et
ladite unité de connexion (43) a
un cadre croisé supérieur (431) ayant deux extrémités qui sont respectivement connectées audit premier cadre supérieur (411) de ladite première unité de cadre (41) et audit second cadre supérieur (421) de ladite seconde unité de cadre (42),
un cadre croisé inférieur (432) ayant deux extrémités qui sont respectivement connectées audit premier cadre inférieur (412) de ladite première unité de cadre (41) et audit second cadre inférieur (422) de ladite seconde unité de cadre (42), et
un élément de queue (433) ayant deux extrémités respectivement connectées à une extrémité arrière de ladite première unité de cadre (41) et une extrémité arrière de ladite seconde unité de cadre (42).

2. Motocyclette (2) selon la revendication 1, **caractérisée en outre en ce que** ledit moteur (5) est monté entre ladite structure de cadre frontal (3) et ladite structure de cadre arrière (4).

3. Motocyclette (2) selon l'une quelconque des revendications 1 à 2, **caractérisée en outre en ce que** ladite première unité de cadre (41) a en outre un premier élément de connexion au moteur (414) formé sur ledit premier cadre inférieur (412) et connecté audit moteur (5), ladite seconde unité de cadre (42) ayant en outre un second élément de connexion au moteur (424) qui est formé sur ledit second cadre inférieur (422) et qui est connecté audit moteur (5), ledit premier élément de connexion au moteur (414) et ledit second élément de connexion au moteur (424) étant respectivement connectés aux extrémités latérales opposées dudit moteur (5) dans la direction latérale.

4. Motocyclette (2) selon l'une quelconque des revendications 1 à 3, **caractérisée en outre en ce que** ladite motocyclette (2) comprend en outre un tuyau d'échappement (7), ladite seconde unité de cadre (42) ayant un élément de connexion de tuyau qui est formé sur ledit second cadre inférieur (422) et qui est connecté audit tuyau (423) d'échappement (7).
